# EUROPÄISCHE PATENTSCHRIFT

(11) **EP 3 829 803 B1**
(45) Veröffentlichungstag und Bekanntmachung des Hinweises auf die Patenterteilung: **31.08.2022**
(21) Anmeldenummer: 19737120.6
(22) Anmeldetag: 11.07.2019
(51) Int. Cl.: B23B 31/00, B25J 15/04, B25J 11/00, B23Q 3/155, B25D 17/08

(54) **VORRICHTUNG UND EIN VERFAHREN ZUM ENTFERNEN EINES WERKZEUGS AUS EINEM WERKZEUGHALTER**
DEVICE AND METHOD FOR REMOVING A TOOL FROM A TOOL HOLDER
DISPOSITIF ET PROCÉDÉ D'ENLÈVEMENT D'UN OUTIL D'UN PORTE-OUTIL

(30) Priorität: 31.07.2018 EP 18186467
(43) Veröffentlichungstag der Anmeldung: 09.06.2021
(73) Patentinhaber: Inventio AG, 6052 Hergiswil (CH)
(72) Erfinder: CAMBRUZZI, Andrea, 8057 Zürich (CH); OLCZYK, Eliza, 6003 Luzern (CH); BÜTLER, Erich, 6030 Ebikon (CH); ZIMMERLI, Philipp, 4624 Härkingen (CH); BITZI, Raphael, 6003 Luzern (CH); ZEMP, Severin, 6015 Luzern (CH)
(74) Vertreter: Inventio AG
(86) Internationale Anmeldenummer: PCT/EP2019/068712
(87) Internationale Veröffentlichungsnummer: WO 2020/025288

(56) Entgegenhaltungen:
- EP-A1- 1 878 549
- DE-U1-202017 102 633
- JP-A- H10 117 096
- JP-A- S58 137 593
- JP-A- S61 249 288
- US-A1- 2001 017 448
- US-A1- 2013 008 003
- US-A1- 2017 113 909

## Beschreibung

Die Erfindung betrifft eine Vorrichtung zum Entfernen eines Werkzeugs aus einem Werkzeughalter gemäss Anspruch 1 und ein Verfahren zum Entfernen eines Werkzeugs aus einem Werkzeughalter gemäss Anspruch 11.

Vorrichtungen zum Entfernen eines Werkzeugs aus einem Werkzeughalter in Form von Werkzeugwechslern sind für stationäre Werkzeugmaschinen wie beispielsweise Fräs-oder Bohrmaschinen bekannt. Beispielsweise beschreibt die EP 044912 A2 einen Werkzeugwechsler für Fräs- und Bohrmaschinen mit einem beweglichen Greiferkopf, welcher ein Werkzeug in Form eines Fräsers oder Bohrers aus einem Werkzeughalter in Form einer Spindel der Werkzeugmaschine entfernen und in einem Magazin ablegen kann. Derartige Werkzeugwechsler sind für den stationären Einsatz an einem festen Ort vorgesehen und für einen mobilen Einsatz nicht geeignet.

JP S58 137593 A offenbart eine Vorrichtung gemäß dem Oberbegriff des Anspruchs 1.

Bei handgeführten Maschinen, wie beispielsweise Schlagbohrmaschinen, werden Werkzeuge in Form von Bohrern von einem Bediener von Hand gewechselt, also ein in einem Werkzeughalter in Form eines Bohrfutters der Schlagbohrmaschine gehaltener Bohrer üblicherweise von Hand entfernt. Ein Wechsel eines Werkzeugs ist insbesondere dann notwendig, wenn ein anderes Werkzeug benötigt wird, es zu starken Verschleiss aufweist oder defekt ist. Ein Bohrer kann insbesondere dann defekt werden, wenn er auf Material trifft, für das er nicht vorgesehen ist. Wenn beispielsweise ein Bohrer, der für das Bohren in Stein oder Beton vorgesehen ist, auf Metall in Form von Armierungen trifft, kann er sehr schnell stumpf werden oder es kann an der Spitze ein Teil des Bohrers abbrechen.

Es sind mobile Montagevorrichtungen bekannt, welche Montageschritte, wie beispielsweise das Bohren von Löchern in Decken oder Wände automatisiert durchführen und zwischen einzelnen Montageschritten oder Montageabschnitten autonom ihre Position verändern können. Derartige automatisierte Montagevorrichtungen sind dazu vorgesehen, einen Montageauftrag möglichst ohne menschliches Eingreifen autonom durchzuführen. Derartige mobile automatisierte Montagevorrichtungen werden beispielsweise in der WO 2016/066615 A2 für das automatisierte Bohren von Löchern in einer Decke von Rohbauten oder der WO 2017/016783 A1 für das automatisierte Ausführen von Montageschritten bei der Installation einer Aufzuganlage in einem Aufzugschacht beschrieben. Beide automatisierten Montagevorrichtungen verfügen über einen Roboter mit einem Arm, der eine Maschine führt. Die Maschine weist jeweils einen Werkzeughaltern auf, der ein Werkzeug hält, beispielsweise einen Bohrer, der Verschleiss unterliegt und defekt werden kann. Es wäre daher wünschenswert, wenn die automatisierten Montagevorrichtungen ein nicht mehr einsatzfähiges Werkzeug einfach und ohne Beteiligung eines menschlichen Bedieners aus dem Werkzeughalter entfernen könnten, um in einem nachgelagerten Schritt ein neues Werkzeug im Werkzeughalter anzuordnen.

Es ist damit insbesondere die Aufgabe der Erfindung, eine Vorrichtung und ein Verfahren zum Entfernen eines Werkzeugs aus einem Werkzeughalter vorzuschlagen, welche ein einfaches Entfernen des Werkzeugs ermöglichen. Erfindungsgemäss wird diese Aufgabe mit einer Vorrichtung mit den Merkmalen des Anspruchs 1 und einem Verfahren mit den Merkmalen des Anspruchs 11 gelöst.

Die erfindungsgemässe Vorrichtung zum Entfernen eines Werkzeugs aus einem Werkzeughalter verfügt über ein Aufnahmeelement mit einem Aufnahmeraum zur Aufnahme wenigstens eines Teils des Werkzeughalters, einen mit dem Aufnahmeraum verbundenen Werkzeugraum zur Aufnahme wenigstens eines Teils eines im Werkzeughalter gehaltenen Werkzeugs und ein Klemmelement. Das Klemmelement ist so ausgeführt und angeordnet, dass es ein im Werkzeugraum aufgenommenes Werkzeug in einer Freigabeposition freigibt und in einer Klemmposition festklemmt. Das Aufnahmeelement weist einen Wirkbereich auf, welcher mit dem Klemmelement zusammenwirken kann. Das Aufnahmeelement und das Klemmelement sind so ausgeführt und angeordnet, dass ausgehend von der Freigabeposition des Klemmelements bei einem Verschieben des Wirkbereichs des Aufnahmeelements in einer Betätigungsrichtung in Richtung Klemmelement der Wirkbereich des Aufnahmeelements so mit dem Klemmelement zusammenwirkt, dass das Klemmelement einen Querschnitt des Werkzeugraums quer zur Betätigungsrichtung verkleinert und damit das Klemmelement in die Klemmposition gebracht wird.

Das Werkzeug kann damit nur durch eine Verschiebung des Werkzeughalters und damit der den Werkzeughalter haltenden Maschine durch das Klemmelement festgeklemmt werden. Durch ein anschliessendes Verschieben der Maschine mit dem Werkzeughalter vom festgeklemmten Werkzeug weg, kann damit das Werkzeug aus dem Werkzeughalter entfernt werden. Das beschriebene Verschieben der Maschine mit dem Werkzeughalter kann von einem Monteur mit einer Hand ausgeführt werden, so dass er sich beispielsweise mit der anderen Hand festhalten und sichern kann. Das beschriebene Verschieben kann insbesondere von einer Montagevorrichtung mit nur einem Roboterarm ausgeführt werden. Es ist damit keine weitere mit ansteuerbaren Aktoren ausgerüstete Vorrichtung oder kein zweiter Roboterarm für das Entfernen des Werkzeugs aus dem Werkzeughalter notwendig.

Die erfmdungsgemässe Vorrichtung weist insbesondere zusätzlich ein Gehäuse auf, das die genannten Komponenten aufnimmt und diese falls notwendig bei etwaigen Verschiebungen gegenüber dem Gehäuse führt.

Hier soll unter einer Maschine eine Komponente mit einem Antrieb verstanden werden, die beispielsweise von einem Monteur oder einem Roboter einer automatisierten Montagevorrichtung geführt wird. Beispiele für derartige Maschinen sind Schlagbohrmaschinen, Bohrmeissel oder Schlagschrauber. Eine Maschine kann über einen Werkzeughalter ein Werkzeug aufnehmen, auf das der Antrieb der Maschine wirkt und das direkt in Kontakt mit dem zu bearbeitenden Material kommt. Beispiele für Werkzeuge sind Bohrer oder Meissel. Die Werkzeuge weisen meist einen hauptsächlich zylinderförmigen Schaft auf, der in einer hauptsächlich zylinderförmigen Ausnehmung des Werkzeughalters aufgenommen wird. Beim Entfernen des Werkzeugs wird damit der genannte Schaft aus der genannten Ausnehmung und damit aus dem Werkzeughalter herausgezogen.

Die einzelnen Komponenten der erfindungsgemässen Vorrichtung sind so auf den im unabhängigen Anspruch genannten Werkzeughalter und das Werkzeug abgestimmt, dass der Aufnahmeraum des Aufnahmeelements wenigstens einen Teil des Werkzeughalters aufnehmen kann, das Werkzeug zumindest zum Teil im Werkzeugraum aufgenommen werden kann und das Klemmelement das Werkzeug in der Klemmposition festklemmen und in der Freigabeposition freigeben kann. Geometrien und Abmessungen der einzelnen Komponenten müssen damit an die Geometrien und Abmessungen des Werkzeughalters und des Werkzeugs angepasst werden. Das dazu notwendige Vorgehen ergibt sich für einen Fachmann automatisch aus dem beschriebenen Aufbau und der beschriebenen Funktionsweise der erfindungsgemässen Vorrichtung.

Das Werkzeug weist insbesondere eine Haupterstreckungsrichtung auf, welche im Falle eines Bohrers mit einer Rotationsachse des Bohrers zusammenfällt. Die Betätigungsrichtung fällt insbesondere mit der genannten Haupterstreckungsrichtung des Werkzeugs zusammen.

Das Aufnahmeelement weist einen Wirkbereich auf, welcher mit dem Klemmelement zusammenwirken kann. Erst beim Verschieben des Wirkbereichs in Betätigungsrichtung wird das Klemmelement von der Freigabeposition in die Klemmposition gebracht. Das Aufnahmeelement ist insbesondere so aufgebaut, dass Teile des Aufnahmeelements, insbesondere der Aufnahmeraum für den Werkzeughalter, in Betätigungsrichtung verschoben werden können, ohne dass auch der Wirkbereich des Aufnahmeelements verschoben wird. Einzelne Teile des Aufnahmeelements können damit relativ verschiebbar zueinander angeordnet sein.

In der Freigabeposition des Klemmelements gibt das Klemmelement das Werkzeug frei. Darunter ist zu verstehen, dass das Werkzeug zumindest in Betätigungsrichtung gegenüber dem Klemmelement verschoben werden kann. In der Klemmposition des Klemmelements klemmt das Klemmelement das Werkzeug fest. Darunter ist zu verstehen, dass das Werkzeug nicht gegenüber dem Klemmelement verschoben oder verlagert werden kann. Es ist ausreichend, wenn die Vorrichtung nur genau ein Klemmelement aufweist.

Bei einem Wechsel des Klemmelements von der Freigabeposition in die Klemmposition verkleinert das Klemmelement den Querschnitt des Werkzeugraums quer zur Betätigungsrichtung. Das Klemmelement kann den Werkzeugraum zusätzlich auch in Betätigungsrichtung verkleinern. Der Querschnitt des Werkzeugraums wird insbesondere durch eine Verschiebung des Klemmelements in den Werkzeugraum hinein verkleinert. Damit wirken der Wirkbereich des Aufnahmeelements und das Klemmelement so zusammen, dass bei einem ausreichenden Verschieben des Wirkbereichs des Aufnahmeelements in Betätigungsrichtung der Wirkbereich das Klemmelement so weit in den Werkzeugraum hineinschiebt, bis das Klemmelement das Werkzeug festklemmt. Das Klemmelement kann das Werkzeug dazu beispielsweise gegen eine Wand des Werkzeugraums drücken und damit festklemmen.

Das Klemmelement wird insbesondere mit einer ersten Feder, beispielsweise einer Schraubenfeder in die Freigabeposition gedrückt. Damit wird sichergestellt, dass sich das Klemmelement nur dann in der Klemmposition befindet, wenn es aktiv vom Wirkbereich des Aufnahmeelements in die Klemmposition gedrückt wird.

Die einzelnen Bauteile der erfindungsgemässen Vorrichtung sind insbesondere aus Metall, bevorzugt aus Aluminium gefertigt. Das Klemmelement kann auch zumindest teilweise aus Stahl, gehärtetem Stahl, Kunststoff oder Gummi bestehen.

In Ausgestaltung der Erfindung sind das Aufnahmeelement und das Klemmelement so ausgeführt und angeordnet, dass ausgehend von der Klemmposition des Klemmelements bei einem Verschieben des Wirkbereichs des Aufnahmeelements entgegen der Betätigungsrichtung der Wirkbereich des Aufnahmeelements so mit dem Klemmelement zusammenwirkt, dass das Klemmelement einen Querschnitt des Werkzeugraums quer zur Betätigungsrichtung vergrössert und damit das Klemmelement in die Freigabeposition gebracht wird. Damit kann ein mittels des Klemmelements festgeklemmtes Werkzeug nur durch eine Verschiebung entgegen der Betätigungsrichtung des Werkzeughalters und damit der den Werkzeughalter haltenden Maschine wieder freigegeben werden. Das Werkzeug kann damit aus dem Werkzeugraum entfernt werden. Da sich auch das Klemmelement dann wieder in der Freigabeposition befindet, kann mit der Vorrichtung anschliessend ein weiteres Werkzeug aus einem Werkzeughalter entfernt werden.

Der Wirkbereich des Aufnahmeelements ist dazu insbesondere so ausgeführt, dass er bei der beschriebenen Verschiebung entgegen der Betätigungsrichtung ein Verschieben des Klemmelements aus dem Werkzeugraum heraus freigibt. Das Klemmelement wird dann insbesondere durch die oben beschriebene erste Feder in die Freigabeposition gedrückt.

In Ausgestaltung der Erfindung weisen der Wirkbereich des Aufnahmeelements und das Klemmelement korrespondierende Fasen auf, welche so ausgeführt und angeordnet sind, dass ausgehend von der Freigabeposition des Klemmelements bei einem Verschieben des Wirkbereichs des Aufnahmeelements in Betätigungsrichtung das Klemmelement quer zur Betätigungsrichtung in den Werkzeugraum verschoben und damit in die Klemmposition gebracht wird. Das Anbringen von Fasen ist sehr einfach und kostengünstig. Damit ist eine besonders einfache und kostengünstige Realisierung des Zusammenwirkens von Wirkbereich des Aufnahmeelements und Klemmelement möglich.

Eine Fase ist in diesem Zusammenhang eine Fläche, welche gegenüber der Betätigungsrichtung geneigt ist. Unter korrespondierenden Fasen sind Fasen zu verstehen, die die selbe oder zumindest fast die selbe Neigung gegenüber der Betätigungsrichtung aufweisen. Die Fasen sind beispielsweise so geneigt, dass sie mit der Senkrechten einen Winkel zwischen 15 - 30°, insbesondere ungefähr 20° einschliessen.

Das genannte Verschieben des Klemmelements erfolgt insbesondere quer, also senkrecht zur Betätigungsrichtung. Es ist aber auch möglich, dass das Klemmelement zusätzlich auch mit oder entgegen der Betätigungsrichtung verschoben wird.

Das Aufnahmeelement weist insbesondere einen Innenraum auf, der in Richtung Klemmelement durch den Wirkbereich abgeschlossen wird. Zumindest ein Teil des Werkzeugraums ist innerhalb des genannten Innenraums angeordnet. Beim Verschieben des Wirkbereichs des Aufnahmeelements in Betätigungsrichtung wird damit das Klemmelement in den genannten Innenraum des Aufnahmeelements hineingeschoben. Die Fase am Wirkbereich des Aufnahmeelements ist so ausgeführt, dass sich ein Querschnitt des Innenraums in Betätigungsrichtung aufweitet. Taucht das Klemmelement im Wirkbereich des Aufnahmeelements in den Innenraum ein, wird es über die Fasen nach innen und damit in den Werkzeugraum verschoben.

Der Innenraum im Wirkbereich des Aufnahmeelements weist insbesondere kreisrunde Querschnitte auf, so dass die genannten Fasen besonders einfach am Wirkbereich des Aufnahmeelements und dem Klemmelement angebracht werden können. Die Fase erstreckt sich insbesondere über den kompletten umlaufenden Rand der genannten Querschnitte.

Statt das Zusammenwirken des Wirkbereichs des Aufnahmeelements und des Klemmelements mit den beschriebenen Fasen zu realisieren, sind auch weitere Lösungen denkbar.

In Ausgestaltung der Erfindung wird das Klemmelement bei einer Bewegung zwischen der Freigabeposition und der Klemmposition mittels einer Führung geführt. Damit kann eine reproduzierbare Bewegung gewährleistet werden, für die eine geringe Kraft erforderlich ist.

Die Führung erfolgt insbesondere gegenüber einem Gehäuse der Vorrichtung und beispielsweise mittels eines Kugelkäfigs.

In Ausgestaltung der Erfindung weist die Vorrichtung mindestens zwei Klemmelemente auf, welche so angeordnet sind, dass sie in der Klemmposition ein im Werkzeugraum aufgenommenes Werkzeug zwischen sich festklemmen. Damit ist ein besonders sicheres Festklemmen des Werkzeugs möglich.

Die Vorrichtung kann auch mehr als zwei, beispielsweise drei oder vier Klemmelemente aufweisen, wobei sie vorzugsweise zwei Klemmelemente aufweist. Die Klemmelemente sind dabei insbesondere in Betätigungsrichtung gesehen gleichmässig um den Werkzeugraum und damit um ein im Werkzeugraum angeordnetes Werkzeug herum angeordnet. Zwei Klemmelemente sind insbesondere also genau gegenüber angeordnet, drei Klemmelemente sind insbesondere jeweils um 120° und vier Klemmelemente insbesondere jeweils um 90° versetzt zueinander angeordnet.

In Ausgestaltung der Erfindung weist das Aufnahmeelement ein erstes Bauteil und ein zweites Bauteil auf, welche eine begrenzte Relativbewegung zueinander in und entgegen der Betätigungsrichtung ausführen können. Der Aufnahmeraum zur Aufnahme wenigstens eines Teils des Werkzeughalters wird dabei vom ersten Bauteil ausgebildet und das zweite Bauteil umfasst den Wirkbereich des Aufnahmeelements. Damit kann der Aufnahmeraum und damit der Werkzeughalter in einem begrenzten Umfang in und entgegen der Betätigungsrichtung verschoben werden, ohne dass sich der Wirkbereich des Aufnahmeelements verschiebt, es also zu einer Änderung der Position des Klemmelements kommt. Die beiden Teile des Aufnahmeelements sind insbesondere so ausgeführt und angeordnet, dass ausgehend von der Freigabestellung des Klemmelements bei einem Verschieben des Aufnahmeraums in Betätigungsrichtung das Klemmelement zunächst in der Freigabestellung verbleibt. Damit kann das Werkzeug in den Bereich des Klemmelements gebracht werden. Ausgehend von der Klemmposition des Klemmelements kann der Aufnahmeraum zunächst entgegen der Betätigungsrichtung verschoben werden, ohne dass das Klemmelement die Klemmposition verlässt. Damit kann der Werkzeughalter vom festgeklemmten Werkzeug wegbewegt werden, so dass das Werkzeug aus dem Werkzeughalter herausgezogen und damit entfernt wird.

Das erste Bauteil und das zweite Bauteil des Aufnahmeelements und das Klemmelement sind insbesondere so zueinander angeordnet, dass ausgehend von einer Ruheposition des ersten und zweiten Bauteils des Aufnahmeelements, bei der sich das Klemmelement in der Freigabeposition befindet, das erste Bauteil des Aufnahmeelements in Betätigungsrichtung bis zu einem Erreichen eines Anschlags relativ gegenüber dem zweiten Bauteil des Aufnahmeelements verschoben werden kann, ohne dass sich die Position des Wirkbereichs des Aufnahmeelements ändert. Der Anschlag kann beispielsweise als ein Sicherungsring oder ein Sprengring ausgeführt sein. Das zweite Bauteil bleibt also nach dem Verschieben des ersten Bauteils aus dessen Ruheposition zunächst noch in seiner Ruheposition. Bei einem weiteren Verschieben des ersten Bauteils des Aufnahmeelements nach Erreichen des genannten Anschlags wird das zweite Bauteil des Aufnahmeelements und damit der Wirkbereich des Aufnahmeelements zusammen mit dem ersten Bauteil des Aufnahmeelements in Betätigungsrichtung verschoben, womit das Klemmelement in die Klemmposition gebracht wird.

Das erste Bauteil des Aufnahmeelements wird im Folgenden als Becher und das zweite Bauteil als Hülse bezeichnet.

Das erste Bauteil, also der Becher und das zweite Bauteil, also die Hülse sind dann in der beschriebenen Ruheposition, wenn keine Kraft über den Becher in Betätigungsrichtung wirkt. Zum Einstellen der Ruheposition weist die Vorrichtung insbesondere eine zweite Feder, beispielsweise eine Schraubenfeder, auf, welche den Becher mit einer Kraft entgegen der Betätigungsrichtung beaufschlagt. Die zweite Feder ist insbesondere von einer hohlzylinderförmigen Führung geführt, welche innerhalb der Schraubenfeder angeordnet ist. Die genannte Führung kann dann insbesondere einen Teil des Werkzeugraums ausbilden.

Die Hülse weist eine hauptsächlich hohlzylindrische Grundform auf. Der in Richtung Klemmelement orientierte Wirkbereich weist insbesondere die oben beschriebene Fase auf. Der Becher kann insbesondere in Betätigungsrichtung in die Hülse eintauchen und wird dabei an einer Innenkontur der Hülse geführt. Die Hülse weist in Richtung Becher insbesondere einen nach innen gerichteten Bund auf, wohingegen der Becher in Richtung Hülse insbesondere einen nach aussen gerichteten Bund aufweist. Diese beiden Bunde begrenzen die Relativbewegung des Bechers gegenüber der Hülse entgegen der Betätigungsrichtung und legen die Ruhepositionen des Bechers und der Hülse fest.

Der Becher ist insbesondere zweiteilig ausgeführt, womit die Vorrichtung sehr einfach montiert werden kann. Ein erster Teil des Bechers mit dem Bund kann dann in die Hülse eingeführt und anschliessend mit einem zweiten Teil des Bechers, welcher den Aufnahmeraum ausbildet, verbunden, beispielsweise verschraubt werden.

In Ausgestaltung der Erfindung ist der Werkzeugraum auf einer dem Aufnahmeraum gegenüberliegenden Seite offen. Über diese Öffnung kann das Werkzeug einfach aus dem Werkzeugraum entfernt werden. Die Öffnung ist dabei insbesondere so gross, dass das Werkzeug durch die Öffnung den Werkzeugraum verlassen kann. Wenn die Vorrichtung so angeordnet wird, dass ein darin aufgenommenes Werkzeug senkrecht oder zumindest nahezu senkrecht orientiert ist, fällt ein aus dem Werkzeughalter entferntes und vom Klemmelement freigegebenes Werkzeug ohne weitere Massnahmen durch die Öffnung aus der Vorrichtung heraus. Unter der Öffnung kann beispielsweise ein Auffangbehälter angeordnet sein, in den das Werkzeug hineinfallen kann.

In Ausgestaltung der Erfindung ist der Aufnahmeraum so ausgeführt, dass bei einem Eindrücken eines Werkzeughalters in den Aufnahmeraum eine Entriegelungshülse des Werkzeughalters gegenüber dem Werkzeughalter so verschoben wird, dass das Werkzeug aus dem Werkzeughalter entfernt werden kann. Insbesondere wird ein Querschnitt quer zur Betätigungsrichtung des Aufnahmeraums in Betätigungsrichtung kleiner. Ein Querschnittsverlauf bzw. ein Verlauf einer Innenkontur des Aufnahmebereichs muss dazu an eine Aussenkontur des Werkzeughalters angepasst sein. Zusätzlich oder alternativ kann ein Querschnitt einer dem Werkzeugraum gegenüberliegenden Öffnung des Aufnahmeraums so ausgeführt sein, dass die Entriegelungshülse oder zumindest ein Teil davon an ihrem umlaufenden Rand anliegt. Werkzeughalter sind üblicherweise so ausgeführt, dass sie eine verriegelte und eine entriegelte Stellung einnehmen können. In der verriegelten Stellung kann ein aufgenommenes Werkzeug nicht aus dem Werkzeughalter entfernt werden. In der entriegelten Stellung ist dagegen ein Entfernen des Werkzeugs möglich. Der Werkzeughalter wird insbesondere durch das Verschieben der Entriegelungshülse entriegelt. Derartige Werkzeughalter sind beispielsweise in der DE 102007000453 A1 und DE 102012223094 A1 beschrieben.

Der Werkzeughalter wird also durch das Hineindrücken in den Aufnahmeraum und das dadurch ausgelöste Verschieben der Entriegelungshülse entriegelt. Es sind damit ausser dem Eindrücken des Werkzeughalters in den Aufnahmeraum keine weiteren Massnahmen zum Entriegeln des Werkzeughalters notwendig. Das Entfernen des Werkzeugs aus dem Werkzeughalter ist damit besonders einfach und benötigt lediglich eine Einführung des Werkzeughalters in den Aufnahmeraum und eine anschliessende Verschiebung des Werkzeughalters zunächst in und dann entgegen der Betätigungsrichtung.

Die oben genannte zweite Feder, welche den Becher und die Hülse in die Ruheposition drücken, ist insbesondere so ausgelegt, dass beim Drücken des Werkzeughalters in Betätigungsrichtung zuerst die Entriegelungshülse verschoben und damit der Werkzeughalter entriegelt wird, bevor der Becher in Betätigungsrichtung verschoben wird. Damit ist sichergestellt, dass während dem Verschieben des Bechers und der Hülse in und entgegen der Betätigungsrichtung der Werkzeughalter immer entriegelt ist.

Statt den Werkzeughalter durch das Eindrücken in den Aufnahmeraum zu entriegeln, kann die Entriegelung auch bereits vor dem Einführen in den Aufnahmeraum durch geeignete Massnahmen entriegelt werden.

Die oben genannte technische Aufgabe wird auch durch ein Verfahren gelöst, bei welchem ein Werkzeughalter und ein darin gehaltenes Werkzeug zuerst so in ein Aufnahmeelement einer oben beschriebenen Vorrichtung eingeführt wird, dass der Werkzeughalter zumindest teilweise innerhalb des Aufnahmeraums und das Werkzeug zumindest teilweise in einem Werkzeugraum der Vorrichtung angeordnet ist. Anschliessend wird der Werkzeughalter mit dem Werkzeug in eine Betätigungsrichtung verschoben, bis das Werkzeug von einem Klemmelement der Vorrichtung festgeklemmt ist. Dann wird der Werkzeughalter ohne das Werkzeug entgegen der Betätigungsrichtung verschoben. Das genannte Verfahren wird dabei von einem Roboter ausgeführt. Der Roboter weist insbesondere nur einen Arm auf.

Das Verfahren läuft insbesondere folgendermassen ab. Der Roboter bewegt eine Maschine mit einem Werkzeughalter und einem darin gehaltenen Werkzeug so, dass der Werkzeughalter so in das Aufnahmeelement einer senkrecht orientierten Vorrichtung eingeführt wird, dass der Werkzeughalter zumindest teilweise innerhalb des Aufnahmeraums und das Werkzeug zumindest teilweise im Werkzeugraum angeordnet ist. Zunächst befinden sich der Becher und die Hülse in der Ruheposition und das Klemmelement in der Freigabeposition. Anschliessend drückt der Roboter den Werkzeughalter in Betätigungsrichtung, so dass zuerst die Entriegelungshülse des Werkzeughalters gegenüber dem Werkzeughalter verschoben wird. Damit wird der Werkzeughalter entriegelt und das Werkzeug kann aus dem Werkzeughalter entfernt werden. Anschliessend verschiebt der Roboter den Werkzeughalter und damit den Becher in Betätigungsrichtung, wobei die Hülse zunächst noch nicht verschoben wird. Die Relativbewegung zwischen Becher und Hülse endet, wenn der Becher einen Anschlag in der Hülse erreicht und die Hülse mitgenommen wird. Das Verschieben der Hülse und damit des Wirkbereichs des Aufnahmeelements führt zu einem Zusammenwirken mit dem Klemmelement, welches quer zur Betätigungsrichtung in den Werkzeugraum hineingeschoben wird. Durch diese Verkleinerung des Querschnitts des Werkzeugraums klemmt das Klemmelement das Werkzeug fest und das Verschieben des Werkzeughalters wird gestoppt. Dies erkennt der Roboter und verschiebt nun den Werkzeughalter entgegen der Betätigungsrichtung. Dies führt zunächst wieder zu einer Relativbewegung zwischen Hülse und Becher, so dass die Hülse zunächst stehen bleibt und der Becher entgegen der Betätigungsrichtung verschoben wird. Da gleichzeitig das Klemmelement in der Klemmposition bleibt, das Werkzeug also festgeklemmt ist, wird es aus dem Werkzeughalter herausgezogen und damit entfernt. Die Relativbewegung zwischen Hülse und Becher endet, wenn die Hülse über die korrespondierenden Bunde an Hülse und Becher mitgenommen wird. Durch das damit entstehende Verschieben der Hülse und damit des Wirkbereichs des Aufnahmeelements entgegen der Betätigungsrichtung kann das Klemmelement durch die erste Feder aus dem Werkzeugraum nach aussen gedrückt und damit in die Freigabeposition gebracht werden. Sobald das Klemmelement die Freigabeposition erreicht hat und damit das Werkzeug freigibt, fällt das Werkzeug über die dem Aufnahmeraum gegenüberliegende Öffnung aus dem Werkzeugraum heraus. Der Roboter bewegt den Werkzeughalter so, dass zunächst der Becher und die Hülse die Ruheposition erreichen und dann der Werkzeughalter aus dem Aufnahmeraum entfernt wird.

Es müssen nicht zwingend alle Verfahrensschritte ausgeführt werden. Es ist beispielsweise möglich, dass die Entriegelung des Werkzeughalters erfolgt, bevor er in den Aufnahmeraum eingeführt wird.

Das genannte Verfahren kann insbesondere im Rahmen einer Montage einer Aufzuganlage in einem Aufzugschacht durchgeführt werden.

Nach dem Entfernen des Werkzeugs kann der Roboter mit dem Werkzeughalter ein neues Werkzeug aufnehmen. Der Werkzeughalter ist dabei insbesondere so ausgeführt, dass zum Aufnehmen eines neuen Werkzeugs keine Entriegelung des Werkzeughalters notwendig ist. Das Werkzeug muss lediglich in den Werkzeughalter eingesteckt werden. Derartige Werkzeughalter sind beispielsweise in der DE 102007000453 A1 und DE 102012223094 A1 beschrieben. Dem Roboter muss damit nur ein neues Werkzeug so zur Verfügung gestellt werden, dass er den Werkzeughalter so gegenüber dem Werkzeug bewegen kann, dass das Werkzeug in den Werkzeughalter eingesteckt und damit aufgenommen wird. Es können beispielsweise in einem Magazin mehrere Werkzeuge zur Aufnahme durch den Werkzeughalter bereitgestellt werden.

Damit wird zuerst in einem ersten Schritt ein zu ersetzendes Werkzeug mit einem oben beschriebenen Verfahren aus dem Werkzeughalter entfernt. Anschliessend wird in einem zweiten Schritt ein neues Werkzeug aus einem Magazin aufgenommen, indem der Werkzeughalter zunächst gegenüber dem neuen Werkzeug ausgerichtet und dann so gegenüber dem neuen Werkzeug in Bewegungsrichtung bewegt wird, dass das Werkzeug vom Werkzeughalter aufgenommen wird. Bei dem genannten Ausrichten des Werkzeughalters wird der Werkzeughalter so positioniert, dass das neuen Werkzeug bei einer Relativbewegung zwischen Werkzeughalter und Werkzeug in Betätigungsrichtung das Werkzeug, bzw. ein Schaft des Werkszeugs in den Werkzeughalter eingesteckt wird.

Damit kann der Roboter nicht nur ein auszutauschendes Werkzeug aus dem Werkzeughalter entfernen, sondern auch ein neues Werkzeug aufnehmen.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind. Die Zeichnungen sind lediglich schematisch und nicht massstabsgetreu.

Dabei zeigen:
- Fig. 1: eine Vorrichtung zum Entfernen eines Werkzeugs aus einem Werkzeughalter mit zwei Klemmelementen in einer Freigabeposition,
- Fig. 2: die Vorrichtung aus Fig. 1 mit den Klemmelementen in einer Klemmposition,
- Fig. 3: einen Roboter beim Entfernen eines Werkzeugs aus einem Werkzeughalter mit einer Vorrichtung aus Fig. 1 und Fig. 2 und
- Fig. 4: einen Roboter beim Aufnehmen eines Werkzeugs mit einem Werkzeughalter aus einem Magazin.

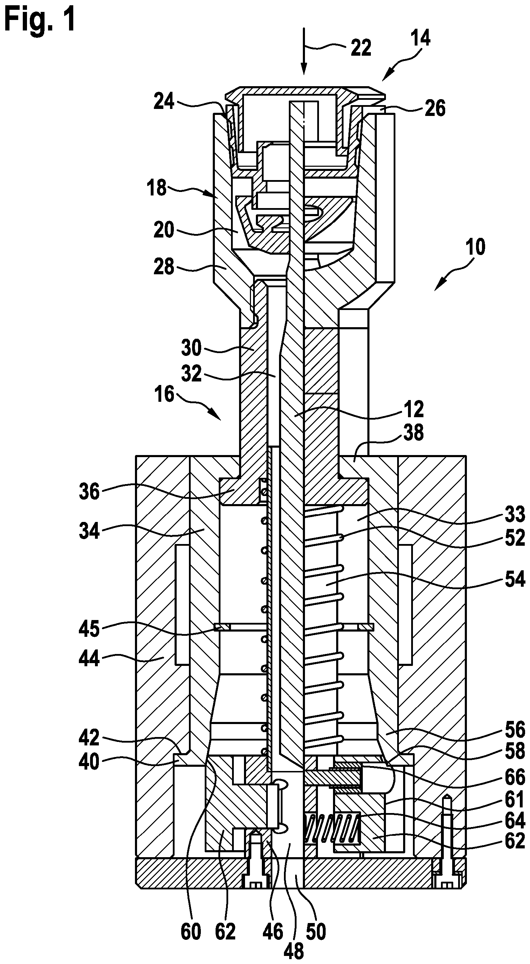

Gemäss Fig. 1 verfügt eine Vorrichtung 10 zum Entfernen eines Werkzeugs 12 in Form eines Bohrers aus einem Werkzeughalter 14 über ein zweiteiliges Aufnahmeelement 16. Ein erstes Bauteil in Form eines Bechers 18 bildet einen Aufnahmeraum 20 aus, der einen Teil des Werkzeughalters 14 aufnimmt. Der Werkzeughalter 14 ist mit einer nicht dargestellten Maschine in Form eines Schlagbohrers verbunden, welche den Werkzeughalter 14 und damit das von ihm aufgenommene Werkzeug 12 antreiben kann. Der Becher 18 weist eine rotationssymmetrische Kontur auf, wobei die Symmetrieachse mit einer Betätigungsrichtung 22 der Vorrichtung 10 zusammenfällt. Querschnitte quer zur Betätigungsrichtung 22 des Aufnahmeraums 20 sind damit kreisrund. Von einer Öffnung 24 des Bechers 18 und damit des Aufnahmeraums 20, über die der Werkzeughalter 14 in den Aufnahmeraum 20 eingeführt werden kann, verkleinern sich die genannten Querschnitte in Betätigungsrichtung 22. Der Aufnahmeraum 20 ist damit leicht konisch ausgeführt. Er ist so ausgeführt, dass eine bewegliche Entriegelungshülse 26 so am Becher 18 anliegt, dass sie bei einem Eindrücken des Werkzeughalters 14 in Betätigungsrichtung 22 in den Aufnahmeraum 20 hinein gegenüber dem restlichen Werkzeughalter 14 verschoben wird und damit der Werkzeughalter 14 entriegelt wird. In der Fig. 1 ist der Werkzeughalter 14 in der entriegelnden Stellung dargestellt. Um eine zuverlässige Entriegelung des Werkzeughalters 14 sicherzustellen, liegt die Entriegelungshülse 26 zusätzlich am Rand der Öffnung 24 des Aufnahmeraums 20 an. In der entriegelten Stellung des Werkzeughalters 14 kann das Werkzeug 12 in Betätigungsrichtung 22 aus dem Werkzeughalter 14 entfernt, also herausgezogen werden.

Der Becher 18 ist ebenfalls zweiteilig ausgeführt. Ein oberer Teil 28, welcher den Aufnahmeraum 20 ausbildet, ist mit einem unteren, hauptsächlich hohlzylinderförmigen Teil 30 verschraubt. Der obere Teil 28 weist dazu ein Innengewinde und der untere Teil 30 ein Aussengewinde auf. Das untere Teil 30 bildet in seinem Innenraum einen Teil eines Werkzeugraums 32 aus, welcher mit dem Aufnahmeraum 20 verbunden ist und das Werkzeug 12 aufnimmt. Der untere Teil 30 des Bechers 18 ragt in einen Innenraum 33 eines zweiten Teils in Form einer Hülse 34 des Aufnahmeelements 16 hinein. Die Hülse 34 ist ebenfalls rotationssymmetrisch ausgeführt, wobei die Symmetrieachse identisch mit der Symmetrieachse des Bechers 18 ist. Der untere Teil 30 des Bechers 18 verfügt über einen umlaufenden, nach aussen gerichteten Bund 36, welcher in der in Fig, 1 dargestellten Position an einem umlaufenden, nach innen gerichteten oberen Bund 38 der Hülse 34 anliegt. Bei der Montage der Vorrichtung 10 wird zuerst der untere Teil 30 des Bechers 18 entgegen der Betätigungsrichtung 22 durch die Hülse 34 durchgesteckt und anschliessend mit dem oberen Teil 28 des Bechers 18 verschraubt. Die Hülse 34 weist an ihrem, dem oberen Bund 38 gegenüberliegenden Ende einen unteren, nach aussen gerichteten umlaufenden Bund 40 auf, welcher in der in Fig, 1 dargestellten Position an einem umlaufenden Absatz 42 eines Gehäuses 44 anliegt. Im Innenraum 33 der Hülse 34 ist in einer Nut ein Sicherungsring 45 angeordnet. Der Sicherungsring 45 begrenzt eine mögliche Relativbewegung des Bechers 18 gegenüber der Hülse 34 in Betätigungsrichtung 22.

Das Gehäuse 44 weist einen innenliegenden Teil 46 auf, der mit dem restlichen Gehäuse 44 verschraubt ist. Der innenliegenden Teil 46 des Gehäuses 44 weist einen Durchgang 48 auf, welcher einen Teil des Werkzeugraums 32 bildet. Der Durchgang 48 bildet eine Öffnung 50 aus, so dass der Werkzeugraum 32 auf einer dem Aufnahmeraum 20 gegenüberliegenden Seite offen ist. Die Öffnung 50 ist dabei so gross, dass das Werkzeug 12 den Werkzeugraum 32 durch die Öffnung 50 verlassen kann. Zwischen dem innenliegenden Teil 46 des Gehäuses 44 und dem unteren Teil 30 des Bechers 18 ist eine in Betätigungsrichtung 22 ausgerichtete Schraubenfeder 52 angeordnet, welche den unteren Teil 30 des Bechers 18 und damit über die Bunde 36, 38 auch die Hülse 34 in die in Fig. 1 dargestellte Position drückt. Diese Positionen des Bechers 18 und der Hülse 34 können dabei als Ruhepositionen bezeichnet werden. Die Schraubenfeder 52 wird durch eine hohlzylinderförmige Führung 54 geführt, welche im Innenraum der Schraubenfeder 52 angeordnet und im innenliegenden Teil 46 des Gehäuses 44 fixiert ist. Die hohlzylinderförmige Führung 54 bildet ebenfalls einen Teil des Werkzeugraums 32 aus. Der Werkzeugraum 32 wird damit vom Becher 18, der hohlzylinderförmigen Führung 54 und dem innenliegenden Teil 46 des Gehäuses 44 ausgebildet.

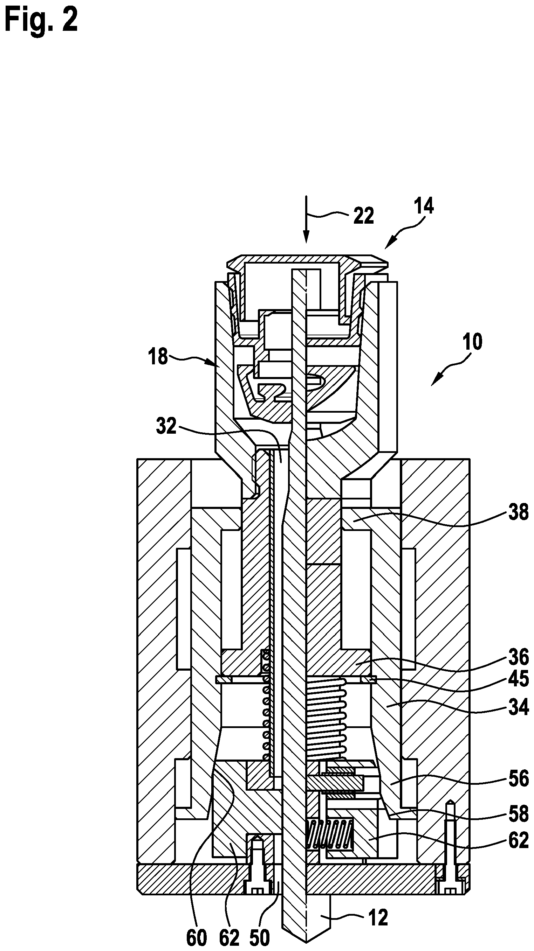

Die Hülse 34 weist im Bereich des unteren, nach aussen gerichteten umlaufenden Bunds 40 einen Wirkbereich 56 auf. Der Wirkbereich 56 umfasst eine umlaufende Fase 58, die so orientiert ist, dass sich ein Querschnitt des Innenraums 33 der Hülse 34 in Betätigungsrichtung 22 vergrössert. Die Fase 58 des Wirkbereichs 56 der Hülse 34 liegt an einer korrespondierenden Fase 60 zweier Klemmelemente 62 an. In Betätigungsrichtung 22 schliessen sich an die Fasen 60 der Klemmelemente 62 jeweils Abschnitte 61 der Klemmelemente 62 mit konstantem Aussen-Durchmesser an. Die beiden Klemmelemente 62 sind bezüglich der Betätigungsrichtung 22 gegenüber angeordnet und sind quer zur Betätigungsrichtung 22 beweglich. Die Klemmelemente 62 sind in der Fig. 1 in einer Freigabeposition dargestellt, in welcher sie das Werkzeug 12 freigeben, das Werkzeug 12 also in Bewegungsrichtung 22 zwischen den Klemmelementen 62 durchgeschoben werden kann. Die Klemmelemente 62 können auch eine Klemmposition einnehmen, die in Fig. 2 dargestellt ist. In der Klemmposition der Klemmelemente 62 ist das Werkzeug 12 zwischen den beiden Klemmelementen 62 festgeklemmt, so dass es nicht bewegt werden kann. Die Klemmelemente 62 werden von jeweils einer Schraubenfeder 64, welche quer zur Betätigungsrichtung 22 ausgerichtet ist und sich am innenliegenden Teil 46 des Gehäuses 44 abstützt, in die Freigabeposition gedrückt. Die beiden Klemmelemente 62 werden also in der Fig. 1 von den Schraubenfedern 64 nach aussen gegen die Fase 58 des Wirkbereichs 46 der Hülse 34 gedrückt. Die Klemmelemente 62 werden von jeweils einer Führung in Form eines Kugelkäfigs 66 gegenüber dem innenliegenden Teil 46 des Gehäuses 44 geführt.

Zum Entfernen des Werkzeugs 12 aus dem Werkzeughalter 14 wird ausgehend von den in Fig. 1 dargestellten Ruhepositionen des Bechers 18 und der Hülse 34 und damit der Freigabeposition der Klemmelemente 62 der Werkzeughalter 14 und damit der Becher 18 des Aufnahmeelements 16 in Bewegungsrichtung 22 verschoben. Zunächst führt der Becher 18 entgegen der Kraft der Schraubenfeder 52 eine Relativbewegung gegenüber der Hülse 34 aus, welche mit Anschlagen des umlaufenden Bunds 36 des Bechers 18 auf den Sicherungsring 45 der Hülse 34 beendet wird. Wenn keine weitere Relativbewegung zwischen Becher 18 und Hülse 34 mehr möglich ist, führt eine weitere Verschiebung des Werkzeughalters 14 und damit des Bechers 18 in Betätigungsrichtung 22 auch zu einer Verschiebung der Hülse 34 und damit des Wirkbereichs 56 der Hülse 34 in Betätigungsrichtung 22. Die Fase 58 des Wirkbereichs 56 der Hülse 34 wirkt mit den korrespondierenden Fasen 60 der Klemmelemente 62 so zusammen, dass die Klemmelemente 62 quer zur Betätigungsrichtung 22 nach innen in Richtung Werkzeug 12 in den Werkzeugraum 32 geschoben werden. Dabei verkleinern die Klemmelemente 62 in ihrem Bereich den Querschnitt des Werkzeugraums 32 quer zu Betätigungsrichtung 22. Die Verschiebung der Klemmelemente 62 nach innen endet, wenn die Klemmelemente 62 am Werkzeug 12 anliegen und es festklemmen. Damit haben die Klemmelemente 62 die Klemmposition erreicht. Die Innenkontur der Hülse 34 im Wirkbereich 56 ist so ausgeführt, dass sowohl die Verschiebung der Klemmelemente 62 nach innen, als auch die Verschiebung der Hülse 34 in Bewegungsrichtung 22 begrenzt ist. Dies wird dadurch erreicht, dass sich an die Fase 58 entgegen der Betätigungsrichtung 22 ein Abschnitt mit konstantem Innen-Durchmesser und dann ein Abschnitt mit sich konstant verringerndem Innen-Durchmesser anschliesst. Sobald die Abschnitte 61 der Klemmelemente 62 mit konstantem Aussen-Durchmesser den Bereich des Wirkbereichs 56 der Hülse 34 mit konstantem Innen-Durchmesser erreichen, endet die Verschiebung der Klemmelemente 62 nach innen. Die Verschiebung der Hülse 34 in Bewegungsrichtung 22 endet, wenn die Abschnitte 61 der Klemmelemente 62 mit konstantem Aussen-Durchmesser den genannten Bereich des Wirkbereichs 56 der Hülse 34 mit sich konstant verringerndem Innen-Durchmesser erreicht.

Fig. 2 zeigt die Vorrichtung 10 mit den Klemmelementen 62 in der Klemmposition, in der das Werkzeug 12 von den Klemmelementen 62 festgeklemmt ist. Der Becher 18 steht am Sicherungsring 45 der Hülse 34 an. Das Werkzeug 12 ist so weit in Betätigungsrichtung 22 verschoben, dass es durch die Öffnung 50 des Werkzeugraums 32 heraus ragt. Wird der Werkzeughalter 14 und damit der Becher 18 aus der in der Fig. 2 dargestellten Position entgegen der Betätigungsrichtung 22 verschoben, führt der Becher 18 zuerst eine Relativbewegung gegenüber der Hülse 34 aus, so dass der Wirkbereich 56 der Hülse 34 zunächst in der in Fig. 2 dargestellten Position verbleibt und demzufolge die Klemmelemente 62 in der dargestellten Klemmposition verbleiben. Das Werkzeug 12 wird also festgehalten und gleichzeitig bewegt sich der Werkzeughalter 14 entgegen der Betätigungsrichtung 22, also vom Werkzeug 12 weg. Das Werkzeug 12 wird damit aus dem Werkzeughalter 14 herausgezogen. Die Relativbewegung des Bechers 18 gegenüber der Hülse 34 endet, wenn der Bund 36 des Bechers 18 den Bund 38 der Hülse 34 erreicht und die Hülse 34 mitgenommen wird. Damit wird auch der Wirkbereich 56 der Hülse 34 entgegen der Betätigungsrichtung 22 verschoben. Die Fase 58 der Hülse 34 wirkt dann mit den Fasen 60 der Klemmelemente 62 so zusammen, dass die Klemmelemente 62 von den Schraubenfedern 64 quer zur Betätigungsrichtung 22 nach aussen verschoben werden. Die Klemmelemente 62 vergrössern damit den Querschnitt des Werkzeugraums 32 quer zur Betätigungsrichtung 22 und werden damit wieder in die Freigabeposition gebracht. Da das Werkzeug 12 bereits aus dem Werkzeughalter 14 herausgezogen und damit entfernt wurde und es auch nicht mehr von den Klemmelementen 62 festgeklemmt wird, fällt es durch die Öffnung 50 aus dem Werkzeugraum 32 und damit aus der Vorrichtung 10 heraus. Unter der Öffnung 50 ist ein nicht dargestellter Auffangbehälter angeordnet, in den das Werkzeug 12 hineinfällt.

Das Verschieben des Bechers 18 und der Hülse 34 endet, wenn sie ihre in Fig. 1 dargestellten Ruhepositionen erreicht haben. Wenn der Werkzeughalter 14 dann aus dem Aufnahmeraum 20 entfernt wird, wird die Entriegelungshülse 26 des Werkzeughalters 14 über eine nicht dargestellte Feder in ihre Verriegelungsposition gebracht.

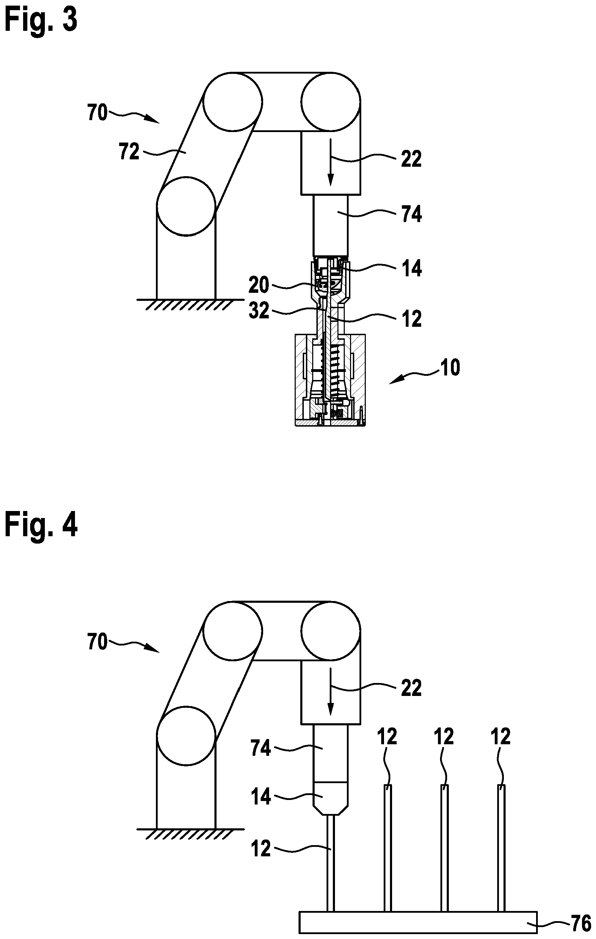

Wie in Fig. 3 dargestellt, kann das Entfernen eines Werkzeugs 12 aus einem Werkzeughalter 14 mit Hilfe einer Vorrichtung 10 insbesondere von einem Roboter 70 mit nur einem Arm 72 ausgeführt werden. Die Vorrichtung 10 ist dabei ortsfest gegenüber dem Roboter 70 angeordnet. Der Roboter 70 trägt eine Maschine 74, welche mit dem das Werkzeug 12 haltenden Werkzeughalter 14 verbunden ist. Der Roboter 70 bewegt die Maschine 74 und mit ihr den Werkzeughalter 14 und das Werkzeug 12 so, dass der Werkzeughalter 14 in einen Aufnahmeraum 20 und das Werkzeug 12 in einen Werkzeugraum 32 einer Vorrichtung 10 entsprechend Fig. 1 und Fig. 2 eingeführt werden. Der Roboter 70 verschiebt die Maschine 74 und damit den Werkzeughalter 14 ausgehend von der in Fig. 1 dargestellten Position in die in Fig. 2 dargestellte Position. Anschliessend verschiebt er die Maschine 74 und damit den Werkzeughalter 14 wieder entgegen der Betätigungsrichtung 22 bis wieder die in Fig. 1 dargestellte Position des Werkzeughalters 14 erreicht ist. Damit wurde wie in Zusammenhang mit den Fig. 1 und 2 beschrieben, das Werkzeug 12 aus dem Werkzeughalter 14 entfernt. Der Roboter 70 kann damit den Werkzeughalter 14 aus dem Aufnahmeraum 20 entfernen.

Sobald der Roboter 70 mit Hilfe der Vorrichtung 10 das zu ersetzende Werkzeug 12 entfernt hat, kann er ein neues Werkzeug mit dem Werkzeughalter 14 aufnehmen. Dies ist in Fig. 4 schematisch dargestellt. In einem Magazin 76 werden dem Roboter 70 mehrere Werkzeuge 12 zur Verfügung gestellt, welche jeweils in Betätigungsrichtung 22 ausgerichtet sind. Zum Aufnehmen eines neuen Werkzeugs 12 bewegt der Roboter 70 die Maschine 74 und damit den Werkzeughalter 14 so, dass ein Werkzeug 12 durch Verschieben des Werkzeughalters 14 in Betätigungsrichtung 22 das Werkzeug 12 in den Werkzeughalter 14 eingeschoben und damit vom Werkzeughalter 14 aufgenommen wird. Der Werkzeughalter 14 ist dabei so ausgeführt, dass zum Aufnehmen eines Werkzeugs 12 dieses nur eingesteckt werden muss, ohne dass ein in Fig. 4 nicht dargestellter Entriegelungsring des Werkzeughalters in eine Entriegelungsposition gebracht werden müsste.

Damit kann der Roboter 70 ohne Beteiligung eines Bedieners oder einer weiteren ansteuerbaren Vorrichtung ein defektes Werkzeug 12 aus dem Werkzeughalter 14 entfernen und ein neues Werkzeug 12 aus dem Magazin 76 aufnehmen.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Vorrichtung zum Entfernen eines Werkzeugs (12) aus einem Werkzeughalter (14) mit
- einem Aufnahmeelement (16, 18), welches einen Aufnahmeraum (20) zur Aufnahme wenigstens eines Teils des Werkzeughalters (14) aufweist,
- einem mit dem Aufnahmeraum (20) verbundenen Werkzeugraum (32) zur Aufnahme wenigstens eines Teils eines im Werkzeughalter (14) gehaltenen Werkzeugs (12) und
- einem Klemmelement (62), welches so ausgeführt und angeordnet ist, dass es ein im Werkzeugraum (32) aufgenommenes Werkzeug (12) in einer Freigabeposition freigibt und in einer Klemmposition festklemmt,
wobei das Aufnahmeelement (16, 34) einen Wirkbereich (56) aufweist, welcher mit dem Klemmelement (62) zusammenwirken kann, **dadurch gekennzeichnet, dass** das Aufnahmeelement (16, 18, 34) und
das Klemmelement (62) so ausgeführt und angeordnet sind, dass ausgehend von der Freigabeposition des Klemmelements (62) bei einem Verschieben des Wirkbereichs (56) des Aufnahmeelements (16, 34) in einer Betätigungsrichtung (22) in Richtung Klemmelement (62) der Wirkbereich (56) des Aufnahmeelements (16, 34) so mit dem Klemmelement (62) zusammenwirkt, dass das Klemmelement (62) einen Querschnitt des Werkzeugraums (32) quer zur Betätigungsrichtung (22) verkleinert und damit das Klemmelement (62) in die Klemmposition gebracht wird.

2. Vorrichtung nach Anspruch 1,
**dadurch gekennzeichnet, dass**
das Aufnahmeelement (16, 34) und das Klemmelement (62) so ausgeführt und angeordnet sind, dass ausgehend von der Klemmposition des Klemmelements (62) bei einem Verschieben des Wirkbereichs (56) des Aufnahmeelements (16, 34) entgegen der Betätigungsrichtung (22) der Wirkbereich (56) des Aufnahmeelements (16, 34) so mit dem Klemmelement (62) zusammenwirkt, dass das Klemmelement (62) einen Querschnitt des Werkzeugraums (32) quer zur Betätigungsrichtung (22) vergrössert und damit das Klemmelement (62) in die Freigabeposition gebracht wird.

3. Vorrichtung nach Anspruch 1 oder 2,
**dadurch gekennzeichnet, dass**
der Wirkbereich (56) des Aufnahmeelements (16, 34) und das Klemmelement (62) korrespondierende Fasen (58, 60) aufweisen, welche so ausgeführt und angeordnet sind, dass ausgehend von der Freigabeposition des Klemmelements (62) bei einem Verschieben des Wirkbereichs (56) des Aufnahmeelements (16, 34) in Betätigungsrichtung (22) das Klemmelement (62) quer zur Betätigungsrichtung (22) in den Werkzeugraum (32) verschoben wird.

4. Vorrichtung nach Anspruch 1, 2 oder 3,
**dadurch gekennzeichnet, dass**
das Klemmelement (62) bei einer Bewegung zwischen der Freigabeposition und der Klemmposition mittels einer Führung (66) geführt wird.

5. Vorrichtung nach einem der Ansprüche 1 bis 4,
**gekennzeichnet durch**
mindestens zwei Klemmelemente (62), welche so angeordnet sind, dass sie in der Klemmposition ein im Werkzeugraum (32) aufgenommenes Werkzeug (12) zwischen sich festklemmen.

6. Vorrichtung nach einem der Ansprüche 1 bis 5,
**dadurch gekennzeichnet, dass**
das Aufnahmeelement (16) ein erstes Bauteil (18) und ein zweites Bauteil (34) aufweist,
- welche eine begrenzte Relativbewegung zueinander in und entgegen der Betätigungsrichtung (22) ausführen können,
- der Aufnahmeraum (20) vom ersten Bauteil (18) ausgebildet wird und
- das zweite Bauteil (34) den Wirkbereich (56) des Aufnahmeelements (16) umfasst.

7. Vorrichtung nach Anspruch 6,
**dadurch gekennzeichnet, dass**
das erste Bauteil (18) und das zweite Bauteil (34) des Aufnahmeelements (16) und das Klemmelement (62) so zueinander angeordnet sind, dass ausgehend von einer Ruheposition des ersten Bauteils (18) und zweiten Bauteils (34) des Aufnahmeelements (16), bei der sich das Klemmelement (62) in der Freigabeposition befindet, das erste Bauteil (18) des Aufnahmeelements (16) in Betätigungsrichtung (22) bis zu einem Erreichen eines Anschlags (45) relativ gegenüber dem zweiten Bauteil (34) des Aufnahmeelements (16) verschoben werden kann, ohne dass sich die Position des Wirkbereichs (56) des Aufnahmeelements (16, 34) ändert und bei einem weiteren Verschieben des ersten Bauteils (18) des Aufnahmeelements (16) nach Erreichen des genannten Anschlags (45) das zweite Bauteil (34) des Aufnahmeelements (16) und damit der Wirkbereich (56) des Aufnahmeelements (16) zusammen mit dem ersten Bauteil (18) des Aufnahmeelements (16) in Betätigungsrichtung (22) verschoben wird und damit das Klemmelement (62) in die Klemmposition gebracht wird.

8. Vorrichtung nach einem der Ansprüche 1 bis 7,
**dadurch gekennzeichnet, dass**
der Werkzeugraum (32) auf einer dem Aufnahmeraum (20) gegenüberliegenden Seite offen ist.

9. Vorrichtung nach einem der Ansprüche 1 bis 8,
**dadurch gekennzeichnet, dass**
der Aufnahmeraum (20) so ausgeführt ist, dass bei einem Eindrücken eines Werkzeughalters (14) in den Aufnahmeraum (20) eine Entriegelungshülse (24) des Werkzeughalters (14) gegenüber dem Werkzeughalter (14) so verschoben wird, dass das Werkzeug (12) aus dem Werkzeughalter (14) entfernt werden kann.

10. Vorrichtung nach Anspruch 9,
**dadurch gekennzeichnet, dass**
ein Querschnitt quer zur Betätigungsrichtung (22) des Aufnahmeraums (20) in Betätigungsrichtung (22) kleiner wird.

11. Verfahren zum Entfernen eines Werkzeugs (12) aus einem Werkzeughalter (14) bei welchem
- der Werkzeughalter (14) und ein darin gehaltenes Werkzeug (12) so in ein Aufnahmeelement (19) einer Vorrichtung (10) nach einem der Ansprüche 1 bis 10 eingeführt wird, dass der Werkzeughalter (14) zumindest teilweise innerhalb des Aufnahmeraums (19) und das Werkzeug (12) zumindest teilweise in einem Werkzeugraum (32) der Vorrichtung (10) angeordnet ist,
- anschliessend der Werkzeughalter (14) mit dem Werkzeug (12) in eine Betätigungsrichtung (22) verschoben wird, bis das Werkzeug (12) von einem Klemmelement (62) der Vorrichtung (10) festgeklemmt ist und
- dann der Werkzeughalter (14) ohne das Werkzeug (12) entgegen der Betätigungsrichtung (22) verschoben wird,
wobei das Verfahren von einem Roboter (70) ausgeführt wird.

12. Verfahren nach Anspruch 11
**dadurch gekennzeichnet, dass**
das Verfahren von einem Roboter (70) mit nur einem Arm (72) ausgeführt wird.

13. Verfahren zum Wechseln eines in einem Werkzeughalter (14) gehaltenen Werkzeugs (12),
**dadurch gekennzeichnet, dass**
in einem ersten Schritt ein zu ersetzendes Werkzeug (12) mit einem Verfahren gemäss Anspruch 11 oder 12 aus dem Werkzeughalter (14) entfernt wird und in einem zweiten Schritt ein neues Werkzeug (12) aus einem Magazin (76) aufgenommen wird, indem der Werkzeughalter (14) zunächst gegenüber dem neuen Werkzeug (12) ausgerichtet wird und dann so gegenüber dem neuen Werkzeug (12) in Bewegungsrichtung (22) bewegt wird, dass das Werkzeug (12) vom Werkzeughalter (14) aufgenommen wird.

## Claims

1. Device for removing a tool (12) from a tool holder (14), comprising
- a receiving element (16, 18) which has a receiving space (20) for receiving at least part of the tool holder (14),
- a tool space (32) connected to the receiving space (20) for receiving at least part of a tool (12) held in the tool holder (14), and
- a clamping element (62) which is designed and arranged such that it releases a tool (12) received in the tool space (32) in a release position and clamps said tool in a clamping position,
the receiving element (16, 34) having an effective region (56) which can interact with the clamping element (62), **characterized in that** the receiving element (16, 18, 34) and the clamping element (62) are designed and arranged such that, starting from the release position of the clamping element (62), when the effective region (56) of the receiving element (16, 34) is moved in an actuation direction (22) toward the clamping element (62), the effective region (56) of the receiving element (16, 34) interacts with the clamping element (62) such that the clamping element (62) reduces a cross section of the tool space (32) transversely to the actuation direction (22) and the clamping element (62) is thus brought into the clamping position.

2. Device according to claim 1,
**characterized in that**
the receiving element (16, 34) and the clamping element (62) are designed and arranged such that, starting from the clamping position of the clamping element (62), when the effective region (56) of the receiving element (16, 34) is moved counter to the actuation direction (22), the effective region (56) of the receiving element (16, 34) interacts with the clamping element (62) such that the clamping element (62) increases a cross section of the tool space (32) transversely to the actuation direction (22) and the clamping element (62) is thus brought into the release position.

3. Device according to either claim 1 or claim 2,
**characterized in that**
the effective region (56) of the receiving element (16, 34) and the clamping element (62) have corresponding chamfers (58, 60) which are designed and arranged such that, starting from the release position of the clamping element (62), when the effective region (56) of the receiving element (16, 34) is moved in the actuation direction (22), the clamping element (62) is moved transversely to the actuation direction (22) into the tool space (32).

4. Device according to claim 1, 2 or 3,
**characterized in that**
the clamping element (62) is guided by a guide (66) during a movement between the release position and the clamping position.

5. Device according to any of claims 1 to 4,
**characterized by**
at least two clamping elements (62) which are arranged such that, in the clamping position, they clamp a tool (12) received in the tool space (32) therebetween.

6. Device according to any of claims 1 to 5,
**characterized in that**
the receiving element (16) has a first component (18) and a second component (34),
- which components can perform a limited movement relative to one another in and counter to the actuation direction (22),
- the receiving space (20) is formed by the first component (18) and
- the second component (34) includes the effective region (56) of the receiving element (16).

7. Device according to claim 6,
**characterized in that**
the first component (18) and the second component (34) of the receiving element (16) and the clamping element (62) are arranged relative to one another such that, starting from a rest position of the first component (18) and second component (34) of the receiving element (16), in which the clamping element (62) is in the release position, the first component (18) of the receiving element (16) can be moved relative to the second component (34) of the receiving element (16) in the actuation direction (22) until it reaches a stop (45) without the position of the effective region (56) of the receiving element (16, 34) changing and, if the first component (18) of the receiving element (16) is moved further after reaching said stop (45), the second component (34) of the receiving element (16), and thus the effective region (56) of the receiving element (16), is moved together with the first component (18) of the receiving element (16) in the actuation direction (22) and thus the clamping element (62) is brought into the clamping position.

8. Device according to any of claims 1 to 7,
**characterized in that**
the tool space (32) is open on a side opposite the receiving space (20).

9. Device according to any of claims 1 to 8,
**characterized in that**
the receiving space (20) is designed such that, when a tool holder (14) is pressed into the receiving space (20), an unlocking sleeve (24) of the tool holder (14) is moved relative to the tool holder (14) such that the tool (12) can be removed from the tool holder (14).

10. Device according to claim 9,
**characterized in that**
a cross section, transverse to the actuation direction (22), of the receiving space (20) gets smaller in the actuation direction (22).

11. Method for removing a tool (12) from a tool holder (14), in which
- the tool holder (14) and a tool (12) held therein are inserted into a receiving element (19) of a device (10) according to any of claims 1 to 10 such that the tool holder (14) is arranged at least partially within the receiving space (19) and the tool (12) is arranged at least partially in a tool space (32) of the device (10),
- then the tool holder (14) together with the tool (12) is moved in an actuation direction (22) until the tool (12) is clamped by a clamping element (62) of the device (10), and
- then the tool holder (14) without the tool (12) is moved counter to the actuation direction (22),
wherein the method is carried out by a robot (70).

12. Method according to claim 11,
**characterized in that**
the method is carried out by a robot (70) having only one arm (72).

13. Method for changing a tool (12) held in a tool holder (14),
**characterized in that**
in a first step, a tool (12) to be replaced is removed from the tool holder (14) using a method according to either claim 11 or claim 12 and, in a second step, a new tool (12) is picked up from a magazine (76) by the tool holder (14) first being aligned with respect to the new tool (12) and then being moved with respect to the new tool (12) in the movement direction (22) such that the tool (12) is received by the tool holder (14).

## Revendications

1. Dispositif permettant de retirer un outil (12) d'un porte-outil (14), comportant
- un élément de réception (16, 18), lequel comporte un espace de réception (20) permettant de recevoir au moins une partie du porte-outil (14),
- un espace pour outil (32) relié à l'espace de réception (20) et permettant de recevoir au moins une partie d'un outil (12) maintenu dans le porte-outil (14) et
- un élément de serrage (62), lequel est conçu et disposé de telle sorte qu'il libère un outil (12) reçu dans l'espace pour outil (32) dans une position de libération et le serre dans une position de serrage,
dans lequel l'élément de réception (16, 34) comporte une zone d'action (56), laquelle peut interagir avec l'élément de serrage (62), **caractérisé en ce que** l'élément de réception (16, 18, 34) et l'élément de serrage (62) sont conçus et disposés de telle sorte que, à partir de la position de libération de l'élément de serrage (62), lorsque la zone d'action (56) de l'élément de réception (16, 34) est déplacée dans une direction d'actionnement (22) dans la direction de l'élément de serrage (62), la zone d'action (56) de l'élément de réception (16, 34) coopère avec l'élément de serrage (62) de telle sorte que l'élément de serrage (62) réduit une section transversale de l'espace pour outil (32) transversalement à la direction d'actionnement (22) et l'élément de serrage (62) est ainsi amené dans la position de serrage.

2. Dispositif selon la revendication 1,
**caractérisé en ce que**
l'élément de réception (16, 34) et l'élément de serrage (62) sont conçus et disposés de telle sorte que, à partir de la position de serrage de l'élément de serrage (62), lorsque la zone d'action (56) de l'élément de réception (16, 34) est déplacée dans la direction opposée à la direction d'actionnement (22), la zone d'action (56) de l'élément de réception (16, 34) coopère avec l'élément de serrage (62) de telle sorte que l'élément de serrage (62) agrandit une section transversale de l'espace pour outil (32) transversalement à la direction d'actionnement (22) et l'élément de serrage (62) est ainsi amené dans la position de libération.

3. Dispositif selon la revendication 1 ou 2,
**caractérisé en ce que**
la zone d'action (56) de l'élément de réception (16, 34) et l'élément de serrage (62) comportent des chanfreins (58, 60) correspondants, lesquels sont conçus et disposés de telle sorte que, à partir de la position de libération de l'élément de serrage (62), lorsque la zone d'action (56) de l'élément de réception (16, 34) est déplacée dans la direction d'actionnement (22), l'élément de serrage (62) est déplacé transversalement à la direction d'actionnement (22) dans l'espace pour outil (32).

4. Dispositif selon la revendication 1, 2 ou 3,
**caractérisé en ce que**
l'élément de serrage (62) est guidé par un guide (66) lors d'un déplacement entre la position de libération et la position de serrage.

5. Dispositif selon l'une quelconque des revendications 1 à 4,
**caractérisé par**
au moins deux éléments de serrage (62), lesquels sont disposés de telle sorte que, dans la position de serrage, ils serrent entre eux un outil (12) reçu dans l'espace pour outil (32).

6. Dispositif selon l'une quelconque des revendications 1 à 5,
**caractérisé en ce que**
l'élément de réception (16) comporte un premier composant (18) et un second composant (34),
- lesquels peuvent effectuer un mouvement relatif limité l'un par rapport à l'autre dans la direction d'actionnement (22) et dans la direction opposée à celle-ci,
- l'espace de réception (20) est formé par le premier composant (18) et
- le second composant (34) comprend la zone d'action (56) de l'élément de réception (16).

7. Dispositif selon la revendication 6,
**caractérisé en ce que**
le premier composant (18) et le second composant (34) de l'élément de réception (16) et l'élément de serrage (62) sont disposés les uns par rapport aux autres de telle sorte que, à partir d'une position de repos du premier composant (18) et du second composant (34) de l'élément de réception (16), dans laquelle l'élément de serrage (62) se trouve dans la position de libération, le premier composant (18) de l'élément de réception (16) peut être déplacé dans la direction d'actionnement (22) par rapport au second composant (34) de l'élément de réception (16) jusqu'à atteindre une butée (45), sans que la position de la zone d'action (56) de l'élément de réception (16, 34) ne change, et lorsque le premier composant (18) de l'élément de réception (16) se déplace davantage après avoir atteint ladite butée (45), le second composant (34) de l'élément de réception (16) et ainsi la zone d'action (56) de l'élément de réception (16) sont déplacés avec le premier composant (18) de l'élément de réception (16) dans la direction d'actionnement (22), et l'élément de serrage (62) est ainsi amené dans la position de serrage.

8. Dispositif selon l'une quelconque des revendications 1 à 7,
**caractérisé en ce que**
l'espace pour outil (32) est ouvert sur un côté opposé à l'espace de réception (20).

9. Dispositif selon l'une quelconque des revendications 1 à 8,
**caractérisé en ce que**
l'espace de réception (20) est conçu de telle sorte que lors d'un enfoncement d'un porte-outil (14) dans l'espace de réception (20), une douille de déverrouillage (24) du porte-outil (14) est déplacée par rapport au porte-outil (14) de telle sorte que l'outil (12) peut être retiré du porte-outil (14).

10. Dispositif selon la revendication 9,
**caractérisé en ce que**
une section transversale diminue transversalement à la direction d'actionnement (22) de l'espace de réception (20) dans la direction d'actionnement (22).

11. Procédé permettant de retirer un outil (12) d'un porte-outil (14), selon lequel
- le porte-outil (14) et un outil (12) maintenu dans celui-ci sont insérés dans un élément de réception (19) d'un dispositif (10) selon l'une quelconque des revendications 1 à 10 de telle sorte que le porte-outil (14) est disposé au moins partiellement à l'intérieur de l'espace de réception (19) et l'outil (12) est disposé au moins partiellement dans un espace pour outil (32) du dispositif (10),
- le porte-outil (14) est ensuite déplacé avec l'outil (12) dans une direction d'actionnement (22) jusqu'à ce que l'outil (12) soit serré par un élément de serrage (62) du dispositif (10) et
- le porte-outil (14) est ensuite déplacé sans l'outil (12) dans la direction opposée à la direction d'actionnement (22),
dans lequel le procédé est mis en œuvre par un robot (70).

12. Procédé selon la revendication 11
**caractérisé en ce que**
le procédé est mis en œuvre par un robot (70) comportant un seul bras (72).

13. Procédé permettant de changer un outil (12) maintenu dans un porte-outil (14),
**caractérisé en ce que**
dans une première étape, un outil (12) à remplacer est retiré du porte-outil (14) selon un procédé selon la revendication 11 ou 12 et dans une seconde étape, un nouvel outil (12) est reçu depuis un magasin (76), le porte-outil (14) étant d'abord aligné par rapport au nouvel outil (12) et étant ensuite déplacé dans la direction de déplacement (22) par rapport au nouvel outil (12) de telle sorte que l'outil (12) est reçu par le porte-outil (14).
